# EUROPÄISCHE PATENTSCHRIFT

(11) **EP 0 346 734 B1**
(45) Veröffentlichungstag und Bekanntmachung des Hinweises auf die Patenterteilung: **03.11.1993**
(21) Anmeldenummer: 89110211.3
(22) Anmeldetag: 06.06.1989
(51) Int. Cl.: C08F 246/00, C08F 220/36, C09D 201/02, C09J 201/02

(54) **Benzophenonderivate und deren Herstellung**
Derivatives of benzophenone and their preparation
Dérivés de benzophénone et leur préparation

(30) Priorität: 16.06.1988 DE 3820464
(43) Veröffentlichungstag der Anmeldung: 20.12.1989
(73) Patentinhaber: BASF Aktiengesellschaft, 67063 Ludwigshafen (DE)
(72) Erfinder: Rehmer, Gerd, Dr., D-6712 Bobenheim-Roxheim (DE); Boettcher, Andreas, Dr., D-6907 Nussloch (DE); Portugall, Michael, Dr., D-6706 Wachenheim (DE)

(56) Entgegenhaltungen:
- EP-A- 0 168 773
- EP-A- 0 246 848

## Beschreibung

Ziel der vorliegenden Erfindung sind mit UV-Licht an der Luft vernetzbare Massen, die insbesondere als Schmelzhaftkleber, zur Beschichtung von mineralischen Substanzen, z.B. Dachziegeln, und als Lacke verwendet werden können. Die Massen sollen erhöhte Reaktivität gegen UV-Strahlen haben. Bei der Verwendung als Schmelzhaftkleber sollen die Produkte geringe Schmelzviskosität, gute Klebrigkeit und eine erhöhte Wärmestandfestigkeit aufweisen.

Aus der NL-Patentanmeldung 6 606 711 sind schon Haftklebebänder bekannt, die durch Überziehen eines flächigen Substrates mit einem Polyacrylatkleber hergestellt sind, wobei mindestens ein monomerer Acrylsäureester, z.B. 2-Ethylhexylacrylat, mitverwendet und durch UV-Bestrahlung und anschließendes Erhitzen polymerisiert wird. Um dabei jedoch brauchbare Ergebnisse zu erzielen, muß unter Inertgasatmosphäre belichtet werden. Außerdem ist die Mitverwendung der gegebenenfalls haut- und augenreizenden leichtflüchtigen Acrylester von Nachteil.

Aus der NL-Patent 7 009 629 ist zudem ein Verfahren zur Herstellung von Klebstoffen bekannt, bei dem Gemische aus Acryl- und Methacrylsäureestern, wie 2-Ethylhexylacrylat, mit organischen Polymeren, wie Cellulosederivaten, Polyolefinen oder Polyestern als Viskositätsregulatoren und ggf. zusammen mit einem Tackifier, wie Polyvinylmethylether, in dünner Schicht auf ein flächiges Substrat aufgebracht und mit energiereicher Strahlung behandelt werden. Auch hierbei ist die Mitverwendung der monomeren Meth(acryl)estern, die reizend wirken und leicht flüchtig sind, von Nachteil, und man erhält zudem nur Produkte, deren Kohäsion für viele Anwendungen auf dem Haftklebergebiet nicht ausreicht.

Bei dem Verfahren der DE-OS 23 57 586 zur Herstellung selbsthaftender Überzüge wird mit ionisierenden Strahlen bestrahlt, und zwar ein bei Raumtemperatur flüssiges Gemisch aus
(A) einem monoolefinisch ungesättigten Monomeren, das bei Raumtemperatur klebrige Polymerisate bildet,
(B) einer mindestens zweifach olefinisch ungesättigten Verbindung,
(C) einem Polymeren eines Erreichungspunktes unter 50°C und eines durchschnittlichen Molekulargewichtes zwischen 500 und 10.000 und
(D) einem üblichen Photoinitiator, z.B. Benzoin, Acetophenon oder Benzophenon,
das gleichfalls auf ein flächiges Substrat aufgebracht ist. Auch bei diesem Verfahren können als Monomere (A) Acryl- und Methacrylsäureester von 4 bis 12 C-Atome enthaltenden Alkanolen eingesetzt werden. Die nach diesem Verfahren hergestellten Klebeschichten weisen zwar hohe Scherfestigkeit bei Raumtemperatur und gute Oberflächenklebrigkeit auf, zeigen aber verhältnismäßig starken kalten Fluß und bei erhöhten Temperaturen ungenügende Scherfestigkeiten.

Mit energiereicher Strahlung wird auch bei dem Verfahren der EP-PS 88 300 gearbeitet, bei dem selbsthaftende Überzüge unter Beschichten von Trägermaterialien mit Derivaten von Dihydroxipropylacrylsäureestern im Gemisch mit Polymeren einer Glastemperatur unter 0°C und eines K-Wertes von 20 bis 80 und/oder einem klebrigmachenden Harz erhalten werden. Hierbei werden zwar gute Oberflächenklebrigkeiten und gute Wärmestandfestigkeiten erzielt, doch treten durch die reizend wirkenden Monomeren und das erforderliche Arbeiten unter Inertgasatmosphäre Nachteile auf.

Da bei Massen, die mit UV-Strahlen vernetzt werden sollen, Photoinitiatoren mitverwendet werden, sollen diese möglichst in den Massen gut löslich sein und aus den Massen nicht ausschwitzen, so daß die Massen auch bei erhöhter Temperatur verarbeitet werden können. Auch sollen diese Photoinitiatoren beim Bestrahlen keine zum Ausschwitzen neigende Abbauprodukte mit starkem Eigengeruch bilden.

Man hat daher auch schon einpolymerisierbare Photoinitiatoren in UV-härtbaren Massen mitverwendet. So werden in der EP-A-0 017 364 z.B. Copolymerisate beschrieben, die u.a. als Klebstoffe und für Dichtungsmassen geeignet sind, und die 0,1 bis 10 Gew.% Allylbenzoylbenzoat als Photoinitiator einpolymerisiert enthalten. Diese Massen lassen sich zwar mit UV-Strahlen vernetzen, ergeben jedoch vernetzte Produkte mit sehr hoher Viskosität. Außerdem ist ihre Reaktivität gegenüber UV-Strahlen zu gering, und damit hergestellte haftklebrige Schichten erfüllen nicht die Anforderungen, die an einen guten Haftkleber gestellt werden. Ferner werden bei diesem Verfahren (Beispiel 10) zusätzlich reizende Monomere mitverwendet.

Nach der Lehre der DE-OS 24 11 169 können mit ultraviolett-Strahlen vernetzbare Haftklebstoffe hergestellt werden, indem man Copolymerisate aus (Meth)acrylestern einsetzt, die monoolefinisch ungesättigte Ether- und Ester-Derivate von substituierten Benzophenonen als Photoinitiatoren einpolymerisiert enthalten. Die dabei einpolymerisierten Benzophenon-Derivate sind jedoch gegenüber UV-Strahlen wenig reaktiv und die aus den Copolymerisaten hergestellten druckempfindlichen Klebstoffe genügen hohen Anforderungen nicht. Außerdem zeigen danach hergestellte Schmelzklebstoffe eine zu hohe Schmelzviskosität, die ihrem praktischen Einsatz im Wege steht.

Auch aus der EP-A-02 46 848 sind mit UV-Strahlen vernetzbare Haftklebstoffe auf Basis von Polyacrylaten bekannt, die als Photoinitiatoren monoolefinisch ungesättigte Benzophenon-Derivate einpolymerisiert enthalten. Diese Haftklebstoffe sollen auf dem medizinischen Gebiet, z.B. für Pflaster, eingesetzt werden und ihre Adhäsion zur Haut soll im Laufe der Zeit nicht zunehmen. Ein Nachteil dieser Haftklebstoffe ist jedoch darin zu sehen, daß sie gegenüber UV-Strahlen nur eine geringe Reaktivität und vergleichsweise hohe Schmelzviskosität besitzen.

Es wurde nun gefunden, daß UV-vernetzbare Massen auf Basis von (Meth)acrylester-Copolymerisaten eines K-Werts von 15 bis 100, besonders vorteilhaft sind, wenn sie einen Gehalt von 0,01 bis 10 Gew.%, bezogen auf die Copolymerisate an einpolymerisierten Monomeren der allgemeinen Formel I 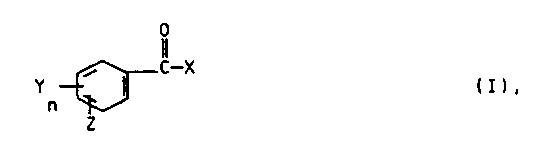
aufweisen, in der
- X: für einen 1 bis 3 C-Atome enthaltende Alkylgruppe oder einen gegebenenfalls durch n-Gruppen Y substituierten Phenylrest,
- Y: für -H, -CF₃, -O-Alkyl- und/oder Alkyl-COO- mit jeweils 1 bis 4 C-Atomen in der Alkylgruppe, Halogen, -CN, -COOH oder eine nicht ortho-ständige -OH-Gruppe,
- n: für 0 bis 4 und
- Z: für eine Gruppe der allgemeinen Formel

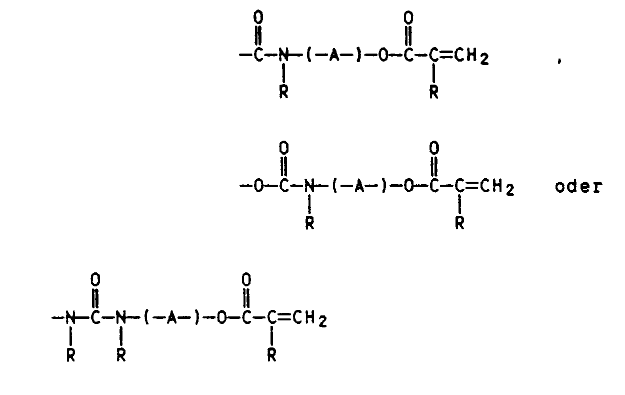

steht, in der
- R: H oder C₁- bis C₄-Alkyl und
- A: einen 2 bis 12 C-Atome aufweisenden Alkylen-, Oxaalkylen- oder Polyoxaalkylenrest
bedeuten.

Die Copolymerisate enthalten als Hauptmonomere im allgemeinen überwiegende Anteile meist 50 bis 99,99 Gew.%, vorzugsweise 70 bis 97,5 Gew.% Acryl- und/oder Methacrylsäureester von 1 bis 24, insbesondere 1 bis 12 C-Atomen aufweisenden Alkanolen, wie Methyl-, Ethyl-, Propyl-, i-Amyl-, i-Octyl, n-, iso- und tert.-Butyl-, Cyclohexyl-, 2-Ethylhexyl-, Decyl-, Lauryl und ferner Stearylacrylat und/oder -methacrylat einpolymerisiert. Als Comonomere kommen z.B. Vinylester 1 bis 20, insbesondere 2 bis 3 C-Atome enthaltender gesättigter Carbonsäure, wie Vinylformiat, Vinylacetat, Vinylpropionat und ferner Vinyllaurat und Vinylstearat, ferner Vinylether mit 3 bis 22 C-Atomen, wie Methyl-, Ethyl-, Butyl-, Hexyl-, Octadecylvinylether, Vinylaromaten mit 8 bis 12 C-Atomen, besonders Styrol oder ferner α-Methylstyrol, Vinyltoluole, tert.-Butylstyrol und Halogenstyrole, Olefine mit 2 bis 20 C-Atomen wie besonders Ethylen, Propylen und ferner n- und iso-Butylen, Diisobuten, Triisobuten und Oligopropylene und/oder Vinylhalogenide wie besonders Vinylchlorid und Vinylidenchlorid sowie Allylether oder Allylester in Betracht. Von besonderem Interesse sind auch solche Copolymerisate, die als Comonomere zusätzlich zu anderen Acryl- und Methacrylestern 0,5 bis 20 Gew.%, bezogen auf die Copolymerisate, vorzugsweise 2 bis 10 Gew.% Tetrahydrofurfuryl-2-acrylat oder -methacrylat und/oder Alkoxygruppen enthaltende Monomere wie 3-Methoxybutyl(meth)acrylat, 2-Methoxyethyl(meth)acrylat, 2-Butoxyethyl(meth)acrylat, 2-Ethoxyethyl(meth)acrylat, N-Butoxymethyl(meth)acrylamid und/oder N-Isobutoxymethyl(meth)acrylamid, einpolymerisiert enthalten, wobei Tetrahydrofurfuryl-2-acrylat und -methacrylat und 3-Methoxybutylacrylat und -methacrylat vorgezogen werden.

Mit besonderem Vorteil enthalten die Copolymerisate zusätzlich 0,1 bis 10, vorzugsweise 0,5 bis 4 Gew.% 3 bis 5 C-Atome enthaltende α,β-monoolefinisch ungesättigte Mono- und/oder Dicarbonsäuren und/oder deren Amide oder gegebenenfalls Monoalkylester oder Anhydride der Dicarbonsäuren einpolymerisiert. Beispiele hierfür sind vor allem Acryl- und Methacrylsäure und Itaconsäure sowie ferner Crotonsäure, Fumarsäure, Maleinsäure, Maleinsäureanhydrid, n-Butyl-maleinsäuremonoester, Fumarsäuremonoethylester, Itakonsäuremonomethylester und Maleinsäuremonomethylester. Von den Amiden derartiger Carbonsäuren sind besonders Acrylamid und Methacrylamid von Interesse. Geeignet sind ferner N-Methylacrylamid und -methacrylamid, N-Methylolacrylamid und -methacrylamid, Maleinsäuremono- und diamid, Itakonsäuremono- und -diamid und Fumarsäuremono- und -diamid. In manchen Fällen kommen auch in Mengen von 0,1 bis 5 Gew.%, bezogen auf die Copolymerisate Vinylsulfonsäure oder ferner Vinylphosphonsäuren in Betracht.

Als Comonomere kommen in Mengen von bis zu 30 Gew.%, vorzugsweise von 0,5 bis 5 Gew.% auch olefinisch ungesättigte tertiäre Aminoverbindungen in Betracht, wie N,N-Dimethyl-, N,N-Diethylamino-ethyl-(meth)-, N,N-Diisopropyl-(meth)-, N,N-Dibutyl-(meth)-acrylamid und -(meth)acrylat, Dimethyl-und Diethyl-aminoethylvinylether, N-Vinylimidazol, N-Vinylimidazolin, Vinylpyridine, Dialkyl(meth)acrylamide, N-Vinylformamid, N-Vinylpyrrolidon, N-Vinylcaprolactam, p-Hydroxy(meth)acrylsäureanilid, N-tert.-Butyl(meth)acrylamid, Diaceton(meth)acrylamid, N-(1- Methylundecyl)(meth)acrylamid, N-Isobornyl(meth)acrylamid, N-Adamantyl-(meth)acrylamid, N-Benzyl(meth)acrylamid, N-4-Methylphenyl-, Methyl-(meth)acrylamid, N-Diphenylmethylacrylamid, Phthalimidomethyl(meth)-acrylamid, (Meth)acrylamidohydroxiessigsäure, (Meth)acrylamidoessigsäure, (Meth)acrylamidoessigsäureester wie (Meth)acrylamidoessigsäuremethylester, 2-(Meth)acrylamido-2-methyl-buttersäure, N-(2,2,2-Trichloro-1-hydroxi)ethyl(meth)acrylamid, N,N-bis(2-cyanoethyl)methacrylamid, N-(1,1,1-Trishydroximethyl), Methyl(meth)acrylamid und N-(3-Hydroxi-2,2-di-methylpropyl)-(meth)acrylamid. Genannt seien ferner 2-Hydroxi-3-[N,N-di(2-hydroxiethyl)]-propyl(meth)acrylat, 2-Methoxi-3-[N,N-di(2-hydroxiethyl)]-propyl(meth)acrylat, 2-Hydroxi-3-[N-hydroxyethyl-N-alkyl]-propyl(meth)acrylate und/oder 2-Hydroxi-3-[N,N-dialkyl]-propyl(meth)acrylat mit 1 bis 10 C-Atomen im Alkylrest, wie 2-Hydroxi-3-[N-hydroxyethyl-N-methyl]-propyl(meth)acrylat und 2-Hydroxi-3-[N-ethyl-N-methyl]-propyl-methacrylat. Schließlich kommen auch noch in Mengen bis zu 30 Gew.%, bevorzugt 0,1 bis 25 Gew.%, besonders bevorzugt 0,5 bis 20 Gew.% monoolefinisch ungesättigte Monomere von der Art des 3-Cyclohexylpropyl-1-(meth)acrylat, Cyclohexyl-(meth)acrylat, 4-tert.-Butylcyclohexyl(meth)acrylat, 2-N-Morpholinoethyl(meth)acrylat, 2-N-Morpholino-N-hexyl(meth)acrylat und Furfuryl(meth)acrylat, Iso-bornyl(meth)acrylat, N-Cyclohexyl(meth)acrylat und N-Isobornyl(meth)acrylat in Frage. Die Copolymerisate haben im allgemeinen K-Werte von 15 bis 100, bestimmt nach DIN 53 726 in 1 %iger Lösung in Tetrahydrofuran bei 25°C. Vorzugsweise beträgt der K-Wert 25 bis 50, wenn die Massen als Schmelzhaftkleber verwendet werden sollen. Sollen die Massen zum Beschichten von Dachziegeln verwendet werden, so betragen ihre K-Werte vorzugsweise 60 bis 100, und Massen, die für Lacke verwendet werden sollen, haben vorzugsweise K-Werte von 15 bis 85.

Die UV-vernetzbaren Massen, die für Haftkleber in Form ihrer Schmelzen appliziert werden, haben meist Staudingerindizes (Viskositätszahlen) zwischen 0, 10 100 ml/g und 1,60 100 ml/g (gemessen in Tetrahydrofuran bei 25°C), bevorzugt 0,2 bis 0,9 120 ml/g, ganz besonders bevorzugt 0,25 bis 0,49 100 ml/g.

Die Verbindungen der allgemeinen Formel I können nach bekannten Verfahren hergestellt werden. Von besonderem Interesse sind die Acryl- und/oder Methacrylester der Verbindung II 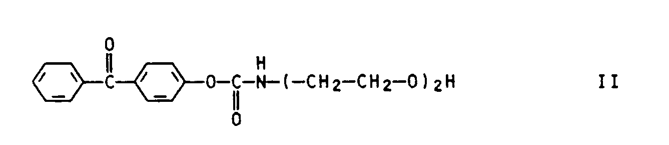
Sehr gut geeignet als einzupolymerisierende Benzophenon-Derivate sind auch die Acryl- und Methacrylsäureester der Verbindungen III und IV 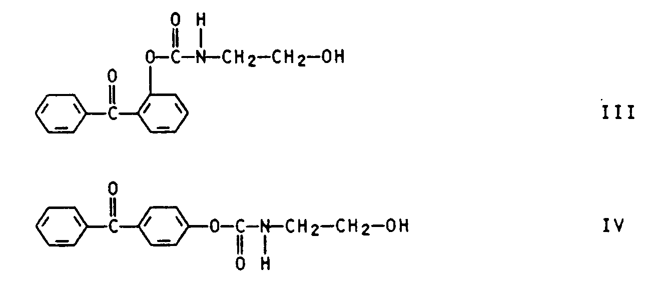
geeignete Acetophenon-Derivate sind z.B. die Verbindungen V und VI 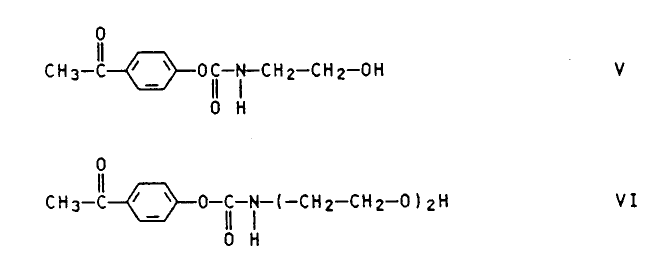
Bei diesen Verbindungen handelt es sich um Acryl- und Methacrylsäureester von Acetophenon- und Benzophenon-Derivaten die an einer Phenylgruppe des Acetophenons bzw. des Benzophenons in ortho- oder para-Stellung eine N-Hydroxyalkylcarbamidsäureestergruppe aufweisen, deren Alkylgruppe 2 bis 4, gegebenenfalls durch eine Etherbrücke miteinander verbundene C-Atome haben.

Schließlich können die Copolymerisate noch weitere Monomere mit funktionellen Gruppen in Mengen bis zu 20 % ihres Gewichts einpolymerisiert enthalten, z.B. Hydroxalkyl(meth)acrylate, wie 2-Hydroxypropyl(meth)acrylat, 2-Hydroxyethyl(meth)acrylat, 4-Hydroxybutyl(meth)acrylat sowie Glycidylacrylat und -methacrylat. Auch Monoacrylsäure- und Monomethacrylsäureester von Polyetherolen oder von propoxylierten Fettalkoholen, beispielsweise eines Molekulargewichts von 200 bis 10.000 oder von polyethoxylierten Alkanolen und/oder Phenolen können in Mengen von 0,5 bis 10 Gew.% in manchen Fällen als Comonomere von Vorteil sein.

Soweit die Copolymerisate als Haftkleber eingesetzt werden sollen, verwendet man bevorzugt solche Acrylsäure- und/oder Methacrylester als Hauptmonomere, deren Homopolymerisate Glastemperaturen unter 0°C, insbesondere unter -10°C haben, insbesondere n- und iso-Butylacrylat und -methacrylat, i-Amyl-, i-Octylacrylat und -methacrylat und 2-Ethylhexylacrylat und -methacrylat sowie ferner Decylacrylat und Laurylacrylat und -methacrylat. Der Anteil dieser Hauptmonomeren beträgt dann vorzugsweise über 60 % der gesamten Monomeren.

Die Copolymerisate enthalten im allgemeinen 0,1 bis 10 % ihres Gewichtes an einpolymerisierten Monomeren der allgemeinen Formel I, doch reichen häufig schon Mengen von 0,01 bis 5 % des Gewichts der Copolymerisate aus. Copolymerisate, die 0,5 bis 25, insbesondere 5 bis 15 % ihres Gewichts Tetrahydrofurfuryl-2-(meth)acrylat zusätzlich zu anderen Acrylestern und Monomeren der allgemeinen Formel I einpolymerisiert enthalten, sind oft sehr niedermolekular und niederviskos.

Die UV-vernetzbaren (Meth)acrylester-Copolymerisate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z. B in Wasser oder flüssigen Kohlenwasserstoffen, oder in Lösung polymerisiert. Vorzugsweise werden die Copolymerisate durch Polymerisation der Monomeren in Lösungsmitteln, insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon und Ester, wie Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.%, bezogen auf das eingesetzte Lösungsgemisch, enthalten, vorgezogen werden.

Als Polymerisationsinitiatoren kommen bei der Lösungspolymerisation beispielsweise 2,2′-Azobisisobutyronitril, Acylperoxide, wie Benzoylperoxid, Dilauroylperoxid, Didecanoylperoxid und Isononanoylperoxid, Alkylperester wie tert.-Butylperpivalat, tert.-Butyl-per-2-ethylhexanoat, tert.-Butyl-per-maleinat, tert.-Butyl-per-isononanoat und tert.-Butylperbenzoat, Dialkylperoxide wie Dicumylperoxid, tert.-Butylperoxid, Di-tert.-Butylperoxid und Peroxidicarbonate, wie Dimystril-Peroxidicarbonat, Bicetylperoxidicarbonat, Bis(4-tert.-Butyl-cyclohexyl)peroxidicarbonat, Dicyclohexylperoxidicarbonat und Di-2-ethylhexyl-peroxidicarbonat, Hydroperoxide wie Cumolhydroperoxid und tert.-Butylhydroperoxid und Polymerisationsinitiatoren wie 3,4-Dimethyl-3,4-diphenylhexan und 2,3-Dimethyl-2,3-diphenylbutan, in Frage. Als Polymerisationsinitiatoren besonders bevorzugt sind Ketonperoxide, wie Methylethylketonperoxid, Acetylacetonperoxid, Cyclohexanonperoxid und Methylisobutylketonperoxid.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die neuen Copolymerisate können dann in lösungsmittelfreiem Zustand, d.h. als Schmelzen, insbesondere als Schmelzhaftkleber, aber auch zum Beschichten mineralischer Substanzen wie besonders Dachziegeln und als Lacke eingesetzt werden. In manchen Fällen ist es auch von Vorteil, die neuen, UV-vernetzbaren Copolymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Soweit man die Copolymerisate in Form von Lösungen beispielsweise für Lacke oder zum Beschichten von Dachziegeln einsetzt, enthalten die Gemische aus den Copolymerisaten und Lösungsmitteln im allgemeinen 10 bis 900, vorzugsweise 20 bis 200, insbesondere 25 bis 150 % ihres Gewichts an Lösungsmitteln. Vorzugsweise werden jedoch die Copolymerisate in lösungsmittelfreier Form eingesetzt.

In manchen Fällen, beispielsweise wenn die Copolymerisate in wäßriger Emulsion durch Emulsionspolymerisation hergestellt werden, können auch übliche Regler in den üblichen Mengen, beispielsweise in Mengen von 0,1 bis 15, vorzugsweise von 2 bis 10 Gew.%, bezogen auf die Monomeren mitverwendet werden. Derartige Regler sind beispielsweise in Mercaptoverbindungen, wie 2-Mercaptoethanol, 3-Mercaptopropionsäuremethylester, 3-Mercaptopropionsäure, 1,6-Dimercaptohexan, 1 ,9-Dimercaptononan, Kohlenwasserstoffe wie Cumol, Alkohole, wie Isopropanol, Isobutanol oder halogenierte Kohlenwasserstoffe wie Tetrachlorkohlenstoff, Tetrabrommethanol, Chloroform oder Bromoform. Als Regler werden Verbindungen wie 3-Mercaptopropionsäure, 3-Mercapto-1,2-propandiol, 2-Mercaptoethanol, Glycerin und Di- und Triglyceride vorgezogen. Des weiteren können auch Ether, wie Dioxan und Tetrahydrofuran, als Regler verwendet werden.

Beim Einsatz der Massen können diese in an sich üblicher Weise modifiziert und/oder konfektioniert werden. Beispielsweise können übliche klebrigmachende Harze, z.B. Kohlenwasserstoffharze, gegebenenfalls modifizierte Kollophoniumharze, Terpenphenolharze, Ketonharze, Aldehydharze oder Homopolymerisate wie Poly-2-ethylhexylacrylat und Poly-n-butylacrylat, ferner Weichmacher, z.B. auf Basis von Mono-, Di- oder Polyesterverbindungen, polychlorierten Kohlenwasserstoffen oder Paraffinölen, Farbstoffe und Pigmente, oder Stabilisatoren oder kautschukelastische Stoffe, wie Natur- oder Synthesekautschuk, Polyvinylether sowie ferner Polybutadienöle, zugesetzt werden. Zur Modifizierung kommen auch ein- oder mehrfach olefinisch ungesättigte höhermolekulare Verbindungen in Betracht, wie mit Acrylsäure veresterte Polyesterole und Polyetherole wie Tripropylenglykol-acrylat, Tetraethylenglykol-acrylat, Polyethylenglykoldiacrylat und Polytetrahydrofuran. Geeignet sind außerdem Diacrylate und Dimethacrylate von Poly-tetrahydrofuran mit Molekulargewichten von meist 250 bis 2000 (Zahlenmittel). Derartige mindestens diolefinisch ungesättigte Verbindungen können mit Vorteil in Mengen von 0,1 bis 10 Gew.%, bezogen auf das neue Copolymerisat eingesetzt werden, wobei diolefinisch ungesättigte Verbindungen dieser Art mit einem Molekulargewicht (Zahlenmittel) von mindestens 500 von besonderem Interesse sind.

Die UV-vernetzbaren Massen eignen sich insbesondere als Schmelzen oder ferner auch als Lösungen oder in Form von wäßrigen Dispersionen zur Herstellung von Überzügen, Beschichtungen und Imprägnierungen, insbesondere von Haftklebern, Haftklebefolien und Haftklebeetiketten sowie Prägezangenfolien. Dabei können die Massen in an sich üblicher Weise durch Streichen, Spritzen, Walzen, Rakeln oder Gießen, gegebenenfalls bei erhöhter Temperatur - meist im Temperaturbereich von 20 bis 150°C - auf übliche Substrate aufgebracht werden, beispielsweise auf Papier, Pappe, Holz, Metalle und Kunststoff-Folien, z.B. aus weichgemachtem PVC, Polyethylen, Polyamiden, Polyethylenglykolterephthalat oder Aluminium sowie Polypropylen.

Soweit dabei Lösungsmittel mitverwendet werden, können diese von den Überzügen leicht, gegebenenfalls bei Raumtemperatur oder wenig erhöhten Temperaturen, im allgemeinen bei Temperaturen von 20 bis 150, vorzugsweise von 50 bis 80°C abgedampft werden, wobei in an sich üblicher Weise Heizstrahler oder Warmluftwälzvorrichtungen eingesetzt werden. Die gegebenenfalls getrockneten oder vorgetrockneten Aufträge können anschließend durch Bestrahlen mit UV-Licht vernetzt werden, wobei man gut klebende Überzüge erhält, die eine hohe Kohäsion und eine gute Schälfestigkeit bei vorzüglicher Alterungsbeständigkeit aufweisen. Dabei braucht nicht unter Inertgasatmosphäre bestrahlt zu werden, man kann vielmehr an der Luft arbeiten. Als UV-Strahler können die üblichen Strahler z.B. Quecksilberdampf-nieder-, -mittel- und -hochdrucklampen eingesetzt werden, die Leistungen von z.B. 80 bis 160 Watt/cm haben können. Dabei ermöglichen Lampen mit höherer Leistung im allgemeinen eine schnellere Vernetzung. In manchen Fällen kann bei der vernetzenden Bestrahlung gleichzeitig durch den IR-Anteil der Lampen restliches Lösungsmittel oder Wasser entfernt werden.

Die Klebeeigenschaften von flächigen Substraten, die eine Haftklebeschicht aufweisen, kann durch Messen der Scherfestigkeit als Maß für die Kohäsion und der Schälfestigkeit als zusammenfassendes Maß für Kohäsion und Oberflächenklebrigkeit erfaßt werden.

Für die Prüfung werden Folien aus Polyethylenglykolterephthalat mit den erfindungsgemäßen Mitteln derart beschichtet, daß sich eine Trockenschichtdicke von 25 µm ergibt.

Die Lösungsmittel werden 1 Minute bei 70°C und 1 bar abgedampft. Die beschichteten und getrockneten Folien werden mit dem Licht von Quecksilbermitteldrucklampen bestrahlt.

Die Bestrahlung erfolgt mit zwei hintereinander angeordneten Quecksilbermitteldrucklampen mit einer Leistung von jeweils 80 Watt/cm. Die beschichteten und getrockneten Folien werden auf ein laufendes Endlosband gelegt, so daß die beschichteten Folien in einem Abstand von 15 cm mit einer Geschwindigkeit von 10 m/min unter den Lampen hindurchlaufen.

Die Bestrahlung erfolgt an der Luft.

Die so hergestellten Folien werden in 2 cm breite Streifen geschnitten und diese Streifen auf eine verchromte Messingplatte aufgebracht. Die Platte wird mit den Streifen 24 Stunden bei 23°C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 x 25 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C und 50°C durchgeführt. Alle Messungen werden 3fach gemacht.

Die in den folgenden Beispielen angegebenen Teile und Prozente beziehen sich auf das Gewicht. Die Bestimmung der K-Werte erfolgt nach DIN 53 726 in 1 %iger Lösung in Tetrahydrofuran bei 25°C. Die Schmelzviskositäten werden mit einem Kegel-Platte-Rheometer z.B. Rotovisko RV 20 mit Meßeinrichtung PK 100 (Fa. Haake, Karlsruhe) gemessen.

Der Staudingerindex (Viskositätszahl) wird in Tetrahydrofuran bei 25°C nach bekannten Methoden bestimmt (z.B. G.V. Schulz, H.-J. Cantow in Houben-Weyl, Methoden der organischen Chemie, G. Thieme Verlag, 1955, Bd. 3/1, Seiten 431 bis 445 und B. Vollmert: Grundriss der makromolekularen Chemie, Band III, Seite 55ff.

### Beispiele

### Copolymerisatlösung P1

Zu einem Gemisch aus 200 Teilen Isopropanol und 6 Teilen Methylethylketonperoxid gibt man 320 Teile eines Gemischs aus 400 Teilen 2-Ethylhexylacrylat, 470 Teilen n-Butylacrylat, 30 Teilen Acrylsäure, 100 Teilen Tetrahydrofurfuryl-2-acrylat und 50 Teilen eines Benzophenonderivats der allgemeinen Formel VII 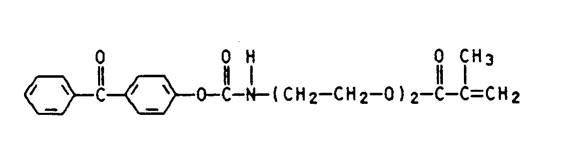
Das Gemisch wird bei 95°C 20 Minuten polymerisiert. Zu diesem anpolymerisierten Gemisch gibt man innerhalb von 2 Stunden den Rest des Monomerengemischs und eine Losung von 8 Teilen Methylethylketonperoxid in 30 Teilen Isopropanol und polymerisiert bei 100°C weitere 4 Stunden. Erhalten wird eine farblose klare Losung eines Copolymerisats P1, das den K-Wert 24 hat. Das von Losungsmittel und flüchtigen Anteilen befreite Copolymerisat P1 hat bei 25°C eine Schmelzviskosität von 35 Pa·s.

### Copolymerisat P2

Man arbeitet wie bei "Copolymerisatlösung P1" angegeben, ersetzt jedoch das Tetrahydrofurfuryl-2-acrylat durch die gleiche Menge 3-Ethoxybutyl-acrylat und ersetzt weiterhin 17 Teile des n-Butylacrylats durch 17 Teile Methylmethacrylat. Man erhält dann eine farblose klare Losung eines Copolymerisats P2 des K-Werts 28, das nach dem Abtrennen des Losungsmittels und von flüchtigen Anteilen eine Schmelzviskosität bei 50°C von 15 Pa·s hat.

### Mischung M1

100 Teile des Copolymerisats P2 werden mit 3,5 Teilen Polytetrahydrofurandiacrylat (Molekulargewicht 650) und 5 Teilen eines Abietinsäureharzes (Foral® 85 der Fa. Hercules) versetzt. Das erhaltene Gemisch ist bei Raumtemperatur fließfähig.

### Mischung M2

100 Teile des Copolymerisats P1 werden mit 5 Teilen Polytetrahydrofurandimethyacrylat (Molekulargewicht 1000) und 10 Teilen eines Abietinsäureharzes (Foral® 85 der Fa. Hercules) versetzt. Man erhalt eine bei Raumtemperatur fließfähige Mischung.

### Copolymerisatlösung P3

Man arbeitet wie bei der Copolymerisatlösung P1 angegeben, ersetzt jedoch das Benzophenonderivat VII durch 44,4 Teile des Benzophenonderivats VIII 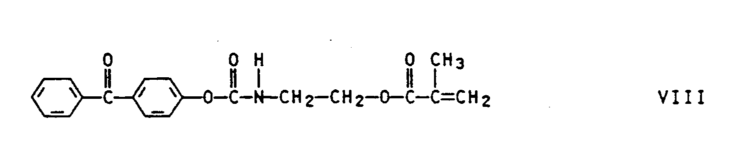
das nach Beispiel 1 der deutschen Patentanmeldung P 39 20 463 hergestellt ist. Man erhält eine Losung eines Copolymerisats P3 des K-Werts 25, das nach dem Abtrennen des Losungsmittels und der flüchtigen Anteile bei 25°C die Schmelzviskosität 36 Pa·s hat.

### Mischung M3

Man mischt 100 Teile des Copolymerisats P3 mit 5 Teilen eines handelsüblichen Oligoesteracrylats (DYNACOLL® A, Typ 2530 VP der Fa. Dynamit Nobel) und erhält eine bei Raumtemperatur fließfähige Mischung.

Die mit den Polymerisaten und deren Gemischen gemessenen Scherfestigkeiten, Schälfestigkeiten und Klebrigkeiten sind in der folgenden Tabelle zusammengestellt, wobei die Bestrahlung der Mischungen M1 und M2 bei einer Geschwindigkeit des Endlosbandes von 10 m/min erfolgt.

**Tabelle 1**

| Ergebnisse der anwendungstechnischen Prüfung als Haftkleber | | | | | |
|---|---|---|---|---|---|
| Probe | Scherfestigkeit [Stunden] bei | | Schälfestigkeit [N/2 cm] | | Klebrigkeit |
| | 23°C | 50°C | sofort | nach 24 Stunden | |
| P1 | >100 | > 10 | 4,1 | 7,5 | gut |
| P2 | >100 | > 10 | 3,5 | 7,0 | gut |
| M1 | > 80 | > 5 | 5,0 | 8,0 | gut |
| M2 | > 70 | > 5 | 4,0 | 7,8 | gut |
| P3 | > 50 | > 2 | 4,0 | 8,2 | gut |
| M3 | > 50 | > 4 | 3,0 | 6,0 | gut |

### Copolymerisatlösung P4

Eine Mischung aus 200 Teilen Ethylacetat, 50 Teilen Tetrahydrofuran, 7,5 Teilen Dimethyl-2,2′-azobisisobutyrat und 200 Teilen einer Monomermischung aus 600 Teilen n-Butylacrylat, 230 Teilen i-Octylacrylat, 150 Teilen Methyl-methacrylat, 20 Teilen Acrylsäure und 7,5 Teilen des Benzophenonderivats der allgemeinen Formel VII wird bei 96°C 20 Minuten anpolymerisiert.

Zu dem Reaktionsgemisch gibt man im Verlauf von 2 Stunden den Rest der Monomermischung. Nach beendeter Zugabe rührt man noch 2 Stunden unter Rückfluß und gibt anschließend unter Rückfluß noch eine Lösung von 2 Teilen tert-Butylper-2-ethylhexanoat in 83 g Ethylacetat hinzu und kocht weitere 4 Stunden unter Rückfluß.

Man erhält die Lösung eines Copolymerisats vom K-Wert 39 und einem Staudingerindex (Viskositätszahl) von 0,38 [100 ml/g].

Nach der Destillation des Lösungsmittels und flüchtiger Anteile erhält man nach anschließender Vakuumdestillation bei 135°C ein bei Raumtemperatur fließendes Harz.

Die Schmelzviskosität bei 120°C beträgt 15 pa·s (D = 500 l/s).

Auf einem beheizbaren Streichtisch werden Polyesterfolien bei 95°C mit dem Harz beschichtet, so daß sich ein Flächenauftrag von 25 g/m² ergibt.

Die beschichteten Folien werden auf das laufende Endlosband einer UV-Bestrahlungsapparatur gelegt und mit einer Geschwindigkeit von 15 bis 25 m/min unter einer Quecksilbermitteldrucklampe mit einer Strahlungsleistung von 80 Watt/cm einmal hindurchgeführt.

Die bestrahlten Folien wurden mit adhäsiv beschichtetem Papier belegt. Nach Lagerung von 24 Stunden werden die Klebeprüfungen durchgeführt.

**Tabelle 2**

| Ergebnisse der anwendungstechnischen Prüfung des Copolymerisatis P4 als Haftkleber | | | | | |
|---|---|---|---|---|---|
| Bandgeschwindigkeit [m/min] | Scherfestigkeit [Stunden] | | Schälfestigkeit [N/2 cm] | | Klebrigkeit |
| | 23°C | 50°C | sofort | nach 24 Stunden | |
| 15 | >24 | >24 | 3,3 | 7,3 | gut |
| 20 | >24 | >24 | 3,5 | 7,6 | gut |
| 25 | >24 | >24 | 4,5 | 7,5 | gut |

## Patentansprüche

1. UV-vernetzbare Massen auf Basis von (Meth)acrylester-Copolymerisaten eines K-Werts von 15 bis 100 (bestimmt nach DIN 53 726 in 1 %iger Lösung in in Tetrahydrofuran bei 25°C), mit einem Gehalt von 0,01 bis 10 Gew.%, bezogen auf die Copolymerisate an einpolymerisierten Monomeren der allgemeinen Formel I 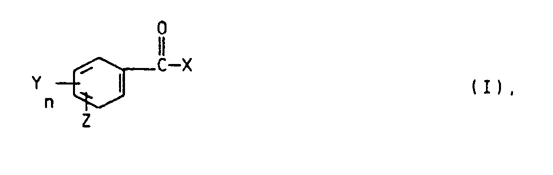 in der
X für eine 1 bis 3 C-Atome enthaltende Alkylgruppe oder einen gegebenenfalls durch n-Gruppen Y substituierten Phenylrest,
Y für -H, -CF₃, -O-Alkyl- und/oder Alkyl-COO- mit jeweils 1 bis 4 C-Atomen in der Alkylgruppe, Halogen, -CN, -COOH oder eine nicht ortho-ständige -OH-Gruppe,
n für 0 bis 4 und
Z für eine Gruppe der allgemeinen Formel 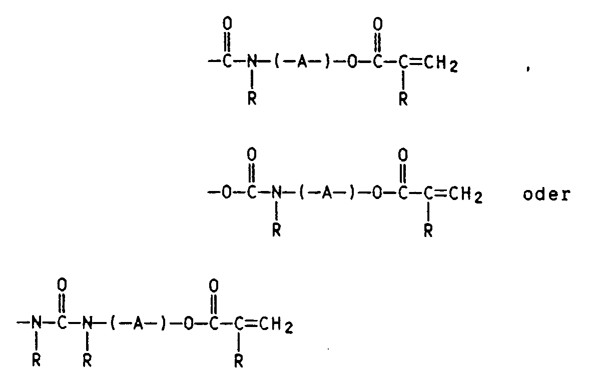 steht, in der
R H oder C₁- bis C₄-Alkyl und
A einen 2 bis 12 C-Atome aufweisenden Alkylen-, Oxaalkylen-oder Polyoxaalkylenrest
bedeuten.

2. UV-vernetzbare Massen gemäß Anspruch 1 dadurch gekennzeichnet, daß sie als Monomere der allgemeinen Formel I einen Acryl- und/oder Methacrylester der Verbindung 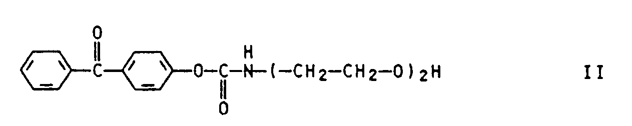 einpolymerisiert enthalten.

3. Verwendung von Massen gemäß den Ansprüchen 1 und 2 mit K-Werten von 25 bis 50 als UV-vernetzbare Schmelzhaftkleber.

4. Verwendung von Massen gemäß den Ansprüchen 1 und 2 mit K-Werten von 60 bis 100 zum Beschichten von flächigen mineralischen Substraten.

5. Verwendung von Massen gemäß den Ansprüchen 1 und 2 mit K-Werten von 15 bis 85 als Lacke.

## Claims

1. A UV-crosslinkable material based on a (meth)acrylate copolymer having a K value of from 15 to 100 (determined according to DIN 53,726 in 1% strength solution in tetrahydrofuran at 25°C) and containing from 0.01 to 10% by weight, based on the copolymer, of copolymerized monomers of the formula I 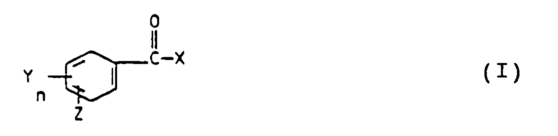 where X is alkyl of 1 to 3 carbon atoms or is phenyl which is unsubstituted or substituted by n Y groups, Y is -H, -CF₃, -O-alkyl and/or alkyl-COO-, where alkyl in each case is of 1 to 4 carbon atoms, halogen, -CN, -COOH or a non-ortho -OH group, n is from 0 to 4 and Z is a group of the formula 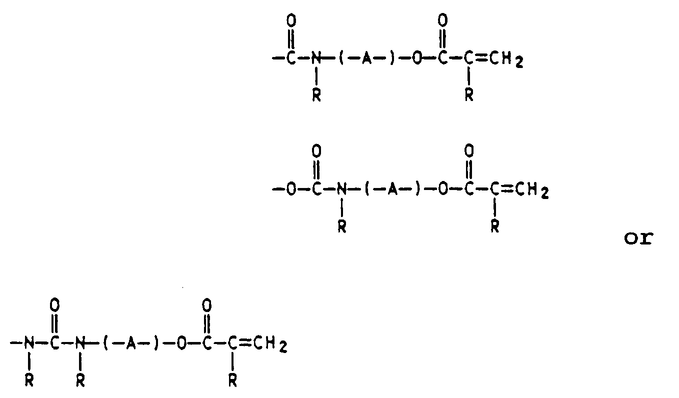 where R is H or C₁-C₄-alkyl and A is an alkylene, oxaalkylene or polyoxaalkylene radical of 2 to 12 carbon atoms.

2. A UV-crosslinkable material as claimed in claim 1, which contains an acrylate or methacrylate of the compound 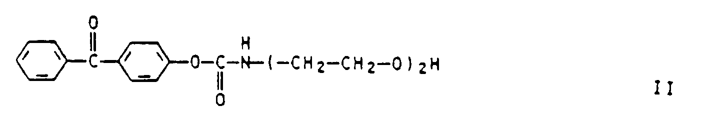 as copolymerized monomers of the formula I.

3. Use of a material as claimed in claims 1 and 2, having a K value of from 25 to 50, as a UV-crosslinkable hotmelt adhesive.

4. Use of a material as claimed in claims 1 and 2, having a K value of from 60 to 100, for coating sheet-like mineral substrates.

5. Use of a material as claimed in claims 1 and 2, having a K value of from 15 to 85, as a surface coating.

## Revendications

1. Matières réticulables par les UV, à base de copolymères d'esters de l'acide (méth)acrylique, d'une valeur K de 15 à 100 (déterminée selon la norme DIN 53 726, en solution à 1% dans le tétrahydrofuranne et à 25°C), d'une teneur de 0,01 à 10% en poids, par rapport aux copolymères, de monomères incorporés par polymérisation et répondant à la formule générale I : 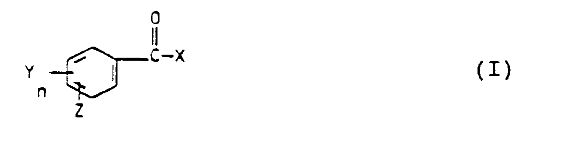 dans laquelle
X représente un radical alkyle contenant de 1 à 3 tomes de carbone, ou un radical phényle éventuellement substitué par n radicaux Y,
Y représente un atome d'hydrogène, un radical -CF₃, -O-alkyle et/ou alkyl-COO-, avec des radicaux alkyle comportant à chaque fois de 1 à 4 atomes de carbone, un atome d'halogène, un radical -CN, -COOH ou -OH qui ne se trouve pas en position ortho,
n a une valeur qui varie de 0 à 4, et
Z représente un groupe de la formule générale : 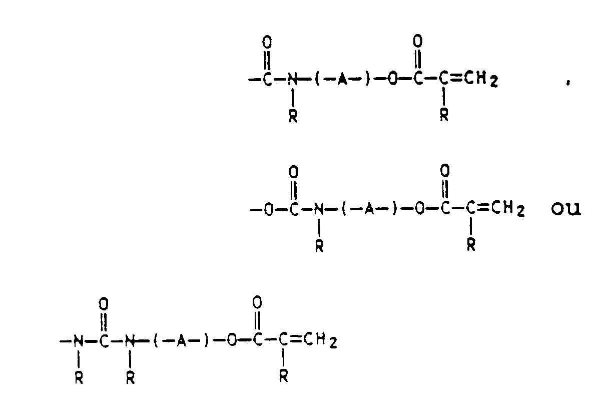
dans laquelle
R représente un atome d'hydrogène ou un radical alkyle en C₁-C₄, et
A représente un radical polyoxyalkylène, oxaalkylène ou alkylène comportant de 2 à 12 atomes de carbone.

2. Matières réticulables par les UV suivant la revendication 1, caractérisées en ce qu'elles contiennent, à titre de monomères de la formule générale I, un ester de l'acide acrylique et/ou de l'acide méthacrylique du composé suivant :

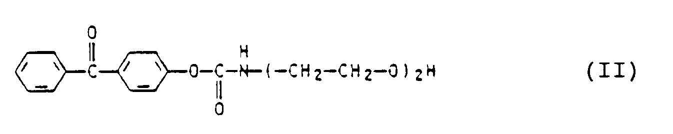

3. Utilisation des matières suivant les revendications 1 et 2 à valeurs K de 25 à 50 à titre de colles de contact à fusion réticulables par les UV.

4. Utilisation des matières suivant les revendications 1 et 2 à valeurs K de 60 à 100 pour le revêtement de supports minéraux plats.

5. Utilisation des matières suivant les revendications 1 et 2 à valeurs K de 15 à 85 à titre de peintures ou laques.
